Europäisches Patentamt

European Patent Office

Office européen des brevets

(11) Veröffentlichungsnummer: **0 353 333**
**A1**

## (12) EUROPÄISCHE PATENTANMELDUNG

(21) Anmeldenummer: 88112776.5

(22) Anmeldetag: 05.08.88

(51) Int. Cl.⁴: **A23L 1/16**

(43) Veröffentlichungstag der Anmeldung:
**07.02.90 Patentblatt 90/06**

(84) Benannte Vertragsstaaten:
**AT CH DE ES FR IT LI**

(71) Anmelder: **KOSMO-BIO BACK- UND TEIGWAREN GMBH**
**Versbacher Strasse 174**
**D-8700 Würzburg(DE)**

(72) Erfinder: **Dohle, Harald**
**Löwensteinstrasse 12**
**D-6772 Markheidenfeld-Michelrieth(DE)**

(74) Vertreter: **Blumbach Weser Bergen Kramer Zwirner Hoffmann Patentanwälte**
**Sonnenbergerstrasse 43**
**D-6200 Wiesbaden 1(DE)**

(54) **Verfahren zur Herstellung eifreier Teigwaren.**

(57) Bei der Herstellung eifreier, insbesondere gefüllter Teigwaren, werden Getreide zu Mehl fein gemahlen und gröbere Schalenteile ausgesiebt. Anschließend wird ein Teil des fein gemahlenen Mehls mit Wasser zu einer Suspension schaumig geschlagen und die Suspension mit dem anderen Teil des fein gemahlenen Mehls zur Herstellung eines verarbeitungsfähigen Teiges beigemischt.

EP 0 353 333 A1

## Verfahren zur Herstellung eifreier Teigwaren

Für die Herstellung von gefüllten Teigwaren werden in der Regel Teige mit Eiern verwandt. Durch die Zugabe von Eiern wird eine Elastizität und Festigkeit erreicht, die bei der Herstellung von gefüllten Teigwaren, wie Ravioli, Capelletti, Tortellini usw. erforderlich ist. Eifreie Teige, sog. Wasser-Teige, die z.B. zur Herstellung von Spaghetti, Bugattini oder Maccaroni dienen, lassen sich nicht zur Herstellung gefüllter Teigwaren verwenden, sie verkleben oder reißen auf, da die Bindung und Geschmeidigkeit, die Eier einem Teig verleihen, fehlt. Der Erfindung liegt daher die Aufgabe zugrunde, ein Verfahren zur Herstellung eifreier, insbesondere gefüllter Teigwaren verfügbar zu machen, bei dem trotz Fehlen von Eiern oder anderer Emulgatoren, die Schwierigkeiten in Bezug auf Verkleben oder Aufreißen der fertigen Teigwaren vermieden sind.

Die erfindungsgemäße Lösung besteht darin, daß Getreide zu Mehl fein gemahlen wird und grobe Schalenteile ausgesiebt werden, daß ein Teil des frischgemahlenen Mehls mit Wasser zu einer Suspension schaumig geschlagen wird und daß die Suspension mit dem anderen Teil des frischgemahlenen Mehls zur Herstellung eines verarbeitungsfähigen Teigs beigemischt wird.

In besonders vorteilhafter Weise wird feingemahlenes Maismehl verwendet, das bei einer sehr guten Elastizität zu einer goldgelben Färbung führt, ohne daß zusätzliche Färbemittel verwendet werden müssen.

Gemäß einer weiteren Abwandlung schlägt die Erfindung vor, daß für den einen Teil zur Erzeugung einer Suspension Maismehl verwendet wird und daß als anderer Teil, davon abweichende Mehlsorten, insbesondere Weizenmehl, beigemischt werden.

Es hat sich als günstig herausgestellt, daß besonders bei Maismehl 25 Volumenprozent Maismehl mit 75 Volumenprozent Wasser zu einer Suspension schaumig geschlagen werden. Dabei erwies sich eine Zeit von ca. 1 Minute als vorteilhaft.

In ihrer weiteren vorteilhaften Ausbildung schlägt die Erfindung vor, daß der eine Teil, ca. 45 Gewichtsprozent des anderen Teils von diesem beträgt und beigemischt wird.

Die Erfindung macht gemäß dem beschriebenen Verfahren Teigwaren, insbesondere gefüllter Art, wie Ravioli, Capelletti, Tortellini u.ä. verfügbar, deren Teig an festen Bestandteilen lediglich Mehl ohne Eier und keine sonstigen Bindemittel oder andere Zusätze umfaßt.

Die Erfindung soll nachstehend anhand eines Ausführungsbeispiels näher beschrieben werden.

Bei Teigwaren, bei denen Eier durch Maismehl ersetzt werden, wird der Mais fein gemahlen und gröbere Schalenteile abgesiebt. Anschließend wird ein Volumenteil des im übrigen ungesichteten Maismehls mit 3 Volumenteilen Wasser ca. 1 Minute leicht schaumig geschlagen. Es bildet sich eine Suspension, deren Konsistenz mit Sahne oder Ei vergleichbar ist, indem durch das Schlagen das Maismehl mit dem Wasser eine gute Bindung eingeht. Diese Suspension wird mit einem Gewichtsanteil von ca. 40 - 45 %, bezogen auf das Mahlgut Hartweizengrieß diesem beigemischt und zu Teigwaren aller Art in herkömmlicher Weise weiter verarbeitet.

Dieser Teig zeichnet sich im Verhältnis zu anderen eifreien Teigen ohne Bindemittelzusätze durch eine hohe Elastizität bei der Verarbeitung beispielsweise zu Ravioli Capelletti Tortellini usw. und eine ebenso hohe Kochfestigkeit aus. Das sonst bei eifreien Teigen zu beobachtende Aufreißen bei konventionellen Rezepten für Extrudermaschinen oder das Verkleben der fertigen gefüllten Teigwaren bei feuchterer Rezeptur, traten nicht auf. Die Elastizität des Teiges war praktisch identisch mit der eines Eierteiges und die Formhaltigkeit und Stabilität des Teiges beim bzw. nach dem Kochvorgang war einwandfrei. Die Teigwaren zeichneten sich durch eine gute Bißfestigkeit und eine goldgelbe Färbung aus, die den eifreien Teigwaren ohne besonderes Färbemittel ein ansprechendes Äußeres verleiht.

### Ansprüche

1. Verfahren zur Herstellung eifreier, insbesondere gefüllter Teigwaren,
dadurch gekennzeichnet,
daß Getreide zu Mehl fein gemahlen wird und gröbere Schalenteile ausgesiebt werden,
daß anschließend ein Teil des feingemahlenen Mehls mit Wasser zu einer Suspension schaumig geschlagen wird und
daß die Suspension mit dem anderen Teil des feingemahlenen Mehls zur Herstellung eines verarbeitungsfähigen Teiges beigemischt wird.

2. Verfahren nach Anspruch 1,
dadurch gekennzeichnet,
daß feingemahlenes Maismehl verwendet wird.

3. Verfahren nach Anspruch 1,
dadurch gekennzeichnet,
daß für den einen Teil zur Erzeugung einer Suspension Maismehl verwendet wird und daß als anderer Teil davon abweichende Mehlsorten beigemischt werden.

4. Verfahren nach Anspruch 3,

dadurch gekennzeichnet,
daß als anderer Teil Weizenmehl beigemischt wird.

5. Verfahren nach einem der Ansprüche 2 bis 4,
dadurch gekennzeichnet,
daß die Suspension ca. 1 Minute schaumig geschlagen wird.

6. Verfahren nach einem der Ansprüche 1-5,
dadurch gekennzeichnet,
daß 25 Volumenprozent Mehl mit 75 Volumenprozent Wasser zu einer Suspension schaumig geschlagen werden.

7. Verfahren nach einem der Ansprüche 1 - 6,
dadurch gekennzeichnet,
daß der eine Teil ca. 40 - 45 Gewichtsprozent des anderen Teils beträgt und diesem beigemischt wird.

8. Teigwaren, hergestellt nach einem der Verfahren gemäß der Ansprüche 1 - 7, insbesondere gefüllter Art, wie Ravioli, Capelletti, Tortellini u.ä.,
dadurch gekennzeichnet,
daß der Teig an festen Bestandteilen lediglich aus Mehl ohne Bindemittel, Eiern oder anderen Zusätzen besteht.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-1 245 749 (M.B. DELLA MASSA)<br>* Seite 2 *<br>--- | 1 | A 23 L 1/16 |
| A | US-A-3 615 677 (R.K. SCHARSCHMIDT)<br>* Ansprüche 1-6 *<br>--- | 1-4,7,8 | |
| A | US-A-3 082 092 (FILENO DE FELICE)<br>* Anspruch 1 *<br>--- | 1-4,8 | |
| A | EP-A-0 073 033 (THE PILLSBURY CO.)<br>* Beispielen VIII-IX *<br>--- | 1,2,8 | |
| A | FR-A- 956 449 (SOCIETY ANONYME FRANCAISE DES PRODUITS BUTONI)<br>* Zusammenfassung; Seite 1, Zeilen 11-25 *<br>----- | 1,2 | |

| | | | RECHERCHIERTE SACHGEBIETE (Int. Cl.4) |
|---|---|---|---|
| | | | A 23 L |

Der vorliegende Recherchenbericht wurde für alle Patentansprüche erstellt

| Recherchenort | Abschlußdatum der Recherche | Prüfer |
|---|---|---|
| DEN HAAG | 21-03-1989 | SANTOS Y DIAZ A.I. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
.......................................................................
& : Mitglied der gleichen Patentfamilie, übereinstimmendes
    Dokument

EPO FORM 1503 03.82 (P0403)